## Europäisches Patentamt

## European Patent Office

## Office européen des brevets

(19)

(11) Veröffentlichungsnummer: **0 071 039**
**A2**

# (12) EUROPÄISCHE PATENTANMELDUNG

(21) Anmeldenummer: **82105974.8**

(22) Anmeldetag: **05.07.82**

(51) Int. Cl.³: **F 16 D 25/14**

(30) Priorität: **28.07.81 AT 3319/81**

(43) Veröffentlichungstag der Anmeldung:
**09.02.83 Patentblatt 83/6**

(84) Benannte Vertragsstaaten:
**BE CH DE FR GB IT LI LU NL SE**

(71) Anmelder: **Delwing, Dieter**
**Im Rötel 21**
**CH-6300 Zug(CH)**

(72) Erfinder:
**Der Erfinder hat auf seine Nennung verzichtet**

(74) Vertreter: **Neubauer, Hans-Jürgen, Dipl.-Phys.**
**Fauststrasse 30**
**D-8070 Ingolstadt(DE)**

(54) **Kupplungsautomat für ein Kraftfahrzeug.**

(57) Die Erfindung betrifft einen Kupplungsautomaten für ein Kraftfahrzeug mit einer hydraulisch betätigbaren Kupplung. Wenn das Gaspedal losgelassen wird, wird die Kupplung automatisch mit Hilfe einer Zylinder-Kolben-Einheit (4) geöffnet. Die Zylinder-Kolben-Einheit (4) wird über je ein parallelgeschaltetes Drosselventil (12) od. Durchgangsventil (9) gesteuert. Wenn der erste oder Rückwärtsgang eingelegt ist oder bei geringer Fahrzeuggeschwindigkeit steuert das Drosselventil (12) die Zylinder-Kolben-Einheit (4), wodurch die Kupplung progressiv schließt. Wenn der zweite oder ein höherer Gang eingelegt ist oder über einer bestimmten höheren Farhzeuggeschwindigkeit steuert das Durchgangsventil (9) die Zylinder-Kolben-Einheit (4), wodurch die Kupplung schlagartig geöffnet und geschlossen wird. Daher ist ein feinfühliges Rangieren und Anfahren genauso möglich wie der sog. intermittierende Fahrbetrieb, bei dem Beschleunigungsphasen mit Motorantrieb mit antriebsfreien Rollphasen abwechseln. Der intermittierende Fahrbetrieb führt zu hohen Kraftstoffeinsparungen.

./...

Fig.1

Kupplungsautomat für ein
Kraftfahrzeug

Die Erfindung betrifft einen Kupplungsautomaten für ein Kraftfahrzeug mit einer federbelasteten Kupplung, einer der Kupplung vorgeschalteten, mit einem Druckmedium beaufschlagbaren Zylinder-Kolben-Einheit und einer Druckpumpe zur Förderung des Druckmediums, die mit der Zylinder-Kolben-Einheit verbunden ist.

Bekannte Kupplungsautomaten haben u. a. den Nachteil, daß mit ihnen ein feinfühliges Anfahren, Rangieren oder eine Kolonnenfahrt, wobei der Schließvorgang der Kupplung oft auch in der Schwebe gehalten werden muß, nicht befriedigend durchgeführt werden kann.

Aufgabe der Erfindung ist es daher, einen Kupplungsautomaten zu schaffen, mit dem eine feinfühlige Betätigung der Kupplung möglich ist und der zur Betätigung der Kupplung bei Schaltvorgängen und zur Durchführung einer intermittierenden Fahrweise (Beschleunigungsphasen mit Motorantrieb und antriebsfreies Rollen wechseln während des Fahrbetriebs einander ab) geeignet ist.

2

Diese Aufgabe wird dadurch gelöst, daß in der von der Zylinder-Kolben-Einheit wegführenden und mit dem Vorratsgefäß verbundenen Leitung parallel ein Drosselventil und ein Durchgangsventil angeordnet sind, daß das Durchgangsventil ein schnell schließendes Magnetventil ist, daß das Drosselventil einen Elektromagneten aufweist, der mit dem Spannungsausgang einer Regeleinheit verbunden ist, die ihrerseits mit einem Motordrehzahlaufnehmer verbunden ist, und die Drosselstellung des Drosselventils durch die Größe der am Elektromagneten anliegenden Spannung bestimmt ist, daß am Gaspedal ein Schalter angeordnet ist, der bei losgelassenem Gaspedal geöffnet ist, daß der Schalter in der Stromzuführung zum Durchgangsventil und zum Drosselventil liegt.

Beim Anfahrvorgang soll das Durchgangsventil geschlossen sein. Die Steuerung der Kupplung erfolgt ausschließlich über das Drosselventil. Bei eingelegtem ersten oder Rückwärtsgang greift die Kupplung entsprechend der Motordrehzahl schleifend und ermöglicht daher einen ruckfreien Anfahrvorgang. Beim Loslassen des Gaspedals wird durch den Schalter am Gaspedal die Stromzuführung zum Drosselventil unterbrochen, so daß dieses schlagartig durch die Federbelastung schließt und dabei die Kupplung sehr schnell geöffnet wird. Dadurch ist zusätzlich zu dem ruckfreien Anfahren ein feinfühliges Manövrieren, das allen praktischen Anforderungen genügt, möglich.

Nach Überschreiten einer Fahrgeschwindigkeit von ca. 20 km/h oder nach dem Einlegen des zweiten oder eines höheren Ganges wird die Stromzuführung zu dem Drosselventil unterbrochen und das Durchgangsventil aktiviert, d. h. das Öffnen oder Schließen der Kupplung wird in diesem Betriebszustand ausschließlich mit Hilfe des Durchgangsventils gesteuert. Bei den Schaltvorgängen wird mit Hilfe des Durchlaßventils die Abflußleitung gesperrt, so daß sich sehr schnell ein Druck in der Zylinder-Kolben-Einheit aufbaut und damit die Kupplung geöffnet wird. Das kann beispielsweise durch Zurücknehmen des Gaspedals und der damit verbundenen Betätigung des Gaspedalschalters geschehen. Nach erfolgtem Gangwechsel wird das Durchgangsventil wieder sehr schnell geöffnet, beispielsweise durch Betätigung des Gaspedals und Ansteuerung eines Elektromagneten am Durchgangsventil, so daß die Druckleitung mit der Abflußleitung verbunden ist und die federbelastete Kupplung schnellstens schließt. In einer bevorzugten Ausführungsform soll der Schließvorgang erst dann automatisch vollzogen werden, wenn die Drehzahl der Motorabtriebs- und Getriebeantriebswelle gleich sind. Damit wird erreicht, daß die Kupplung nahezu ohne Schleifen geschlossen wird und die Kupplungsbeläge auch bei häufiger Kupplungsbetätigung nur einem geringen Verschleiß unterliegen. Dazu müssen die Drehzahlen gemessen und in einer Vergleichereinheit verglichen werden, so daß beim Wiedergasgeben, wenn die Motordrehzahl abgesunken ist, erst die Motordrehzahl auf die Drehzahl der Getriebeantriebswelle des in der Zwischenzeit freirollenden Fahrzeugs vor dem Schließen der Kupplung erhöht wird.

Zusätzlich zu der einfachen Möglichkeit für den Gangwechsel die Kupplung zu betätigen, kann mit der erfindungsgemäßen Kupplung auch die intermittierende Fahrweise einfach durchgeführt werden. Für das antriebsfreie Rollen wird einfach das Gaspedal losgelassen und damit der Gaspedalschalter betätigt. Dadurch wird das Durchgangsventil angesteuert und die Kupplung schlagartig geöffnet. Für die dann erforderliche Beschleunigungsphase wird das Gaspedal wieder betätigt, wodurch die Kupplung, bei der bevorzugten Ausführung bei Drehzahlgleichheit von Motorabtriebs- und Getriebeantriebswelle, wieder geschlossen wird. Wenn die intermittierende Fahrweise so erfolgt, daß sich das Fahrzeug jeweils auf ca. 10 % unter die gewünschte durchschnittliche Geschwindigkeit verlangsamt und anschließend auf ca. 10 % über die durchschnittliche Geschwindigkeit wieder beschleunigt wird, kann eine sehr hohe Treibstofferparnis erreicht werden.

Um auch mit der "Motorbremse", d. h. im Schiebebetrieb, bei langen Talfahrten fahren zu können, kann das automatische Öffnen der Kupplung bei zurückgenomem Gaspedal unterbrochen werden. Dazu kann ein Handschalter am Armaturenbrett vorgesehen werden, mit dessen Hilfe der Gaspedalschalter unwirksam bzw. überbrückt werden kann.

Bei der Ansteuerung der Steuerventile, insbesondere des Drosselventils, können neben der Motordrehzahl auch weitere Faktoren berücksichtigt werden wie z. B. die Motorbelastung und die Motortemperatur. So kann z. B. beim Anfahren am Berg oder bei kaltem Motor das Schließen der Kupplung erst bei einer geeigneten höheren Drehzahl erfolgen.

Anhand eines Ausführungsbeispiels wird die Erfindung mit weiteren Einzelheiten beschrieben.

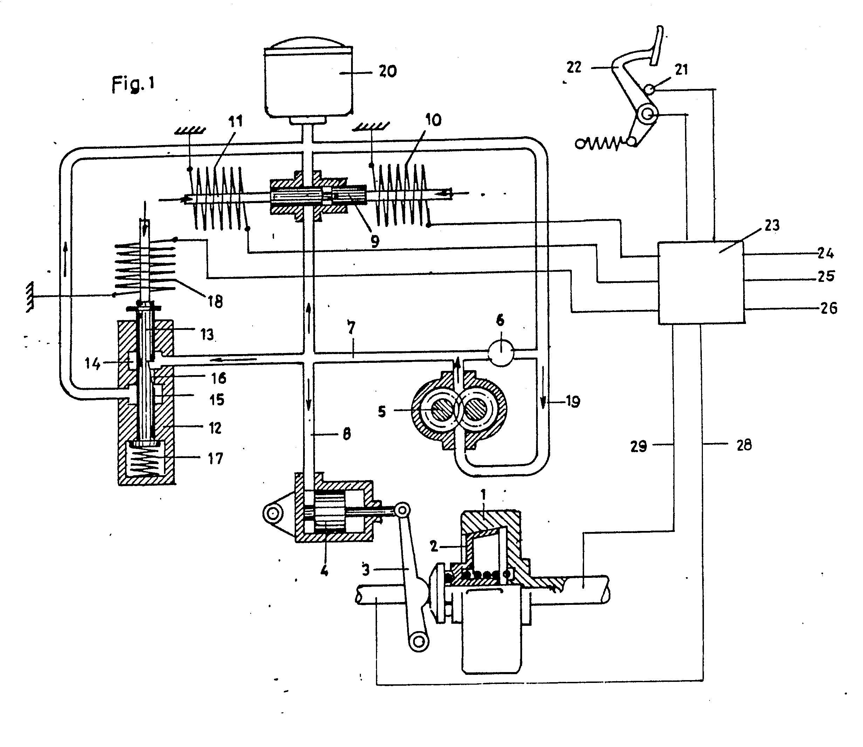

Fig. 1 zeigt das Schema eines Kupplungsautomaten einschließlich der elektrischen Ansteuerung,

Fig. 2 zeigt einen Ausschnitt aus dem Drosselventil mit dem Restspalt und

Fig. 3 zeigt einen weiteren Schnitt durch das Drosselventil.

Der in einem Motorschwungrad 1 angeordnete Kupplungskonus 2 wird durch eine Kupplungsfeder geschlossen gehalten. Zum Öffnen der Kupplung dient ein Kupplungshebel 3, welcher mit einer hydraulisch arbeitenden Zylinder-Kolben-Einheit 4 betätigt wird.

Der hydraulische Druck wird mit einer Ölpumpe 5 erzeugt, in deren Druckleitung 7 ein Überdruckventil 6 angeordnet ist. Die Druckleitung 7 ist durch eine Leitung 8 sowohl mit der Zylinder-Kolben-Einheit 4 als auch über ein Durchgangsventil 9 mit einem Vorratsbehälter 20 verbunden. Das Durchgangsventil 9 wird mit zwei Elektromagneten 10 und 11 alternierend zum Öffnen oder Schließen der Verbindung zum Vorratsbehälter 20 verwendet.

Die Druckleitung 7 ist über eine Abzweigung auch mit dem Drosselventil 12 verbunden. Die Drosselventilstange 13 reguliert den Durchflußquerschnitt zwischen einer Druckkammer 14 und einer Abflußkammer 15 mit Hilfe einer, einen Drosselspalt bildenden Schrägfläche 16. Die Regulierung wird mit einem gegen seine Federbelastung 17 wirkenden, spannungsabhängigen Regelmagneten 18 zum Öffnen des Drosselspaltes in der Weise erreicht, daß der Drosselspalt der jeweiligen Spannung entsprechend vergrößert oder verkleinert wird.

Die an den Regelmagneten 18 angelegte Spannung wird motordrehzahlabhängig geregelt, so daß bei steigender Motordrehzahl die Spannung steigt und dadurch der Drosselspalt vergrößert wird. Dadurch sinkt der Druck in der Druckleitung 7 der Ölpumpe 5 und die Kupplung wird entsprechend der mit der Motordrehzahl steigenden Spannung progressiv geschlossen.

Die Stromführung zum Regelmagneten 18 geht über einen an einem Gaspedal 22 angebrachten Schalter 21, der nur geschlossen ist, wenn das Gaspedal 22 betätigt ist. Wird das Gaspedal 22 losgelassen, so wird die Stromzuführung zu dem Regelmagneten 18 unterbrochen und dadurch der Drosselspalt 16 geschlossen, wodurch in der Druckleitung 7 der volle Druck hergestellt und die Kupplung schlagartig geöffnet wird. Bei einer Wiederbetätigung des Gaspedals 22 wird die Stromzuführung zu dem Regelmagneten wieder hergestellt und dadurch in der Druckleitung wieder ein der Motordrehzahl entsprechender Druck aufgebaut.

Auf diese Weise dient das Drosselventil 12 sowohl der progressiven Steuerung des Kupplungsschließvorgangs zum Anfahren als auch für den Freilaufeffekt mit Hilfe des Gaspedals zum feinfühligen Rangieren und Kolonnenfahren. Die Stromzuführung über den Gaspedalkontakt 21 zum Regelmagneten 18 erfolgt nur bei eingelegtem ersten oder Rückwärtsgang und nur bis zu einer Fahrgeschwindigkeit von ca. 20 km/h.

Wird der zweite Gang geschaltet, so wird die Stromzuführung zum Regelmagneten 18 unterbrochen und damit der Drosselspalt 16 geschlossen, wobei zugleich die Stromzuführung über den Gaspedalschalter 21 zu den beiden das Durchgangsventil 9 betätigenden Elektromagneten 10 und 11 hergestellt wird. Beim Loslassen des Gaspedals 22 wird dann der den Abfluß absperrenden Magnet 11 mit einem Stromimpuls betätigt und die Kupplung schlagartig geöffnet. Bei der Wiederbetätigung des Gaspedals 22 wird entsprechend mit einem Stromimpuls der den Abfluß öffnende Magnet 10 betätigt und die Kupplung dadurch schlagartig geschlossen, aber erst dann, wenn die Motordrehzahl und die Drehzahl der Getriebeantriebswelle gleich sind.

Zur Steuerung aller elektrischer Vorgänge dient eine Rechnereinheit 23, der durch die Leitungen 28 bzw. 29 die Informationen über die Drehzahl des Motors und der Getriebeantriebswelle zugeführt werden und die sowohl mit dem Regelmagneten 18 als auch mit den beiden Durchgangsventil-Magneten 11 und 12 und mit dem Gaspedalschalter 21 in Verbindung steht.

In der Rechnereinheit 23 werden die Drehzahlen der Motorabtriebs- und Getriebeantriebswelle erfaßt und laufend verglichen. Der Stromimpuls zu dem das Durchgangsventil 9 öffnenden und damit die Kupplung ohne Verzögerung schließenden Elektromagneten 10 erfolgt erst bei Drehzahlgleichheit.

Die Spannung des Regelmagneten 18 wird durch die Rechnereinheit 23 so geregelt, daß der Druckabfall in der Druckleitung und damit das Schließen der Kupplung erst bei einer bestimmten Motordrehzahl beginnt, so daß die Kupplung beim Absinken der Motordrehzahl unter diese Einkuppeldrehzahl, in der Regel bei der Leerlaufdrehzahl, wieder geöffnet wird.

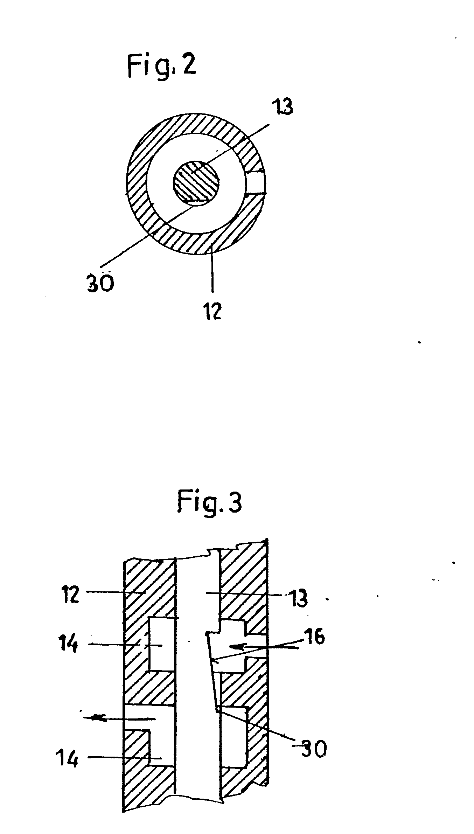

Der Drosselspalt 16 ist so gestaltet (Fig. 2 und 3), daß auch beim Schließen des Drosselventils 12 ein Restspalt 30 offen bleibt, durch welchen nach dem Abstellen des Motors, der noch vorhandene Druck in der Druckleitung 7 abgebaut und damit die Kupplung geschlossen wird. Das Fahrzeug kann daher mit eingelegtem Gang gesichert und zum Anlassen des Motors angeschleppt werden. Wird der Motor bei der Leerlaufstellung des Getriebes angelassen, öffnet sich die Kupplung sofort und schließt progressiv nach dem Erreichen der Einkuppeldrehzahl.

Der Rechnereinheit 23 können weitere Informationen, wie z. B. die Motortemperatur 24, die Motorbelastung 25 und die Fahrgeschwindigkeit 26, eingegeben werden, um anhand dieser Daten, z. B. beim Kaltstart oder beim Anfahren am Hang, die Einkuppeldrehzahl entsprechend zu erhöhen.

DIPL.-PHYS. H.-J. NEUBAUER

PATENTANWALT
BEIM EUROPÄISCHEN PATENTAMT
ZUGELASSENER VERTRETER

Fauststraße 30
·D-8070 Ingolstadt
☎ 0841/7 24 12

0071039

Herr

Dieter Delwing

Im Rötel 21

CH-6300 Zug

P 29DE/82/55

## Patentansprüche

1. Kupplungsautomat für ein Kraftfahrzeug mit einer federbelasteten Kupplung, einer der Kupplung vorgeschalteten, mit einem Druckmedium beaufschlagbaren Zylinder-Kolben-Einheit und einer Druckpumpe zur Förderung eines Druckmediums, die mit der Zylinder-Kolben-Einheit verbunden ist, dadurch gekennzeichnet,

daß in der von der Zylinder-Kolben-Einheit (4) wegführenden und mit dem Vorratsgefäß (20) verbundenen Leitung parallel ein Drosselventil (12) und ein Durchgangsventil (9) angeordnet sind,

daß das Durchgangsventil ein schnell schließendes Magnetventil (9, 10, 11) ist,

daß das Drosselventil (12) einen Elektromagneten (18) aufweist, der mit dem Spannungsausgang einer Regeleinheit (23) verbunden ist, die ihrerseits mit einem Motordrehzahlaufnehmer (28) verbunden ist, und die Drosselstellung des Drosselventils (12) durch die Größe der am Elektromagneten (18) anliegenden Spannung bestimmt ist,

daß am Gaspedal (22) ein Schalter (21) angeordnet ist, der bei losgelassenem Gaspedal (22) geöffnet ist, daß der Schalter (21) in der Stromzuführung zum Durchgangsventil (9) und zum Drosselventil (12) liegt.

2. Kupplungsautomat nach Anspruch 1, dadurch gekennzeichnet, daß die Regeleinheit (23) entsprechend einer bestimmten Motordrehzahl eine bestimmte Spannung abgibt.

3. Kupplungsautomat nach Anspruch 2, dadurch gekennzeichnet, daß die Regeleinheit (23) bis zu einer bestimmten Motordrehzahl eine so kleine Spannung abgibt, daß das Drosselventil (12) geschlossen ist, daß die Regeleinheit (23) ab einer bestimmten Motordrehzahl eine so große Spannung abgibt, daß das Drosselventil (12) ganz geöffnet ist.

4. Kupplungsautomat nach einem der Ansprüche 1 bis 3, dadurch gekennzeichnet, daß das Drosselventil (12) einen Restspalt (16) aufweist.

5. Kupplungsautomat nach einem der Ansprüche 1 bis 4, dadurch gekennzeichnet, daß an die Regeleinheit (23) ein weiterer Drehzahlaufnehmer (29) für die Getriebedrehzahl angeschlossen ist, daß in einer Vergleicherstufe in der Regeleinheit (23) die Drehzahlen von Motor und Getriebe verglichen werden, und daß bei Gleichheit von Motor- und Getriebedrehzahl ein Stromimpuls an das Magnetventil (9, 10, 11) abgegeben wird und dieses öffnet.

6. Kupplungsautomat nach einem der Ansprüche 1 bis 5, dadurch gekennzeichnet, daß eine Umschalteinheit zwischen Drosselventil (12) und Schalter (21) vorgesehen ist, an die Sensoren zum Erkennen des eingelegten ersten und Rückwärtsgangs und zum Erkennen einer Fahrgeschwindigkeit unter einer bestimmten Geschwindigkeit (vorzugsweise 20 km/h) angeschlossen sind, und daß die Umschalteinheit die Stromzufuhr zu dem Elektromagneten (18) bei eingelegtem ersten Gang, Rückwärtsgang und unter der bestimmten Geschwindigkeit über den Schalter (21) schaltet.

7. Kupplungsautomat nach einem der Ansprüche 1 bis 6, dadurch gekennzeichnet, daß die Regeleinheit (23), Vergleicherstufe und Umschalteinheit eine elektronische Rechnereinheit sind, an die weitere Aufnehmer für Motortemperatur (24), Motorbelastung (25) und Fahrgeschwindigkeit (26) angeschlossen sind.

Fig.1

P 29 DE 182 55

## Fig. 2

13

30      12

## Fig. 3

12      13

14      16

14      30

P 29DE 182/55